# EUROPEAN PATENT SPECIFICATION

(11) **EP 2 306 451 B1**
(45) Date of publication and mention of the grant of the patent: **26.08.2015**
(21) Application number: 10164674.3
(22) Date of filing: 05.10.2005
(51) Int. Cl.: G10L 15/183, G06F 17/27

(54) **Speech recognition**
Spracherkennung
Reconnaissance vocale

(30) Priority: 05.10.2004 US 957579; 05.10.2004 CA 2483805
(43) Date of publication of application: 06.04.2011
(62) Divisional of application: 05792217.1
(73) Proprietor: Inago Corporation, Toronto ON M5A 4L5 (CA)
(72) Inventor: Farmaner, Gary, Toronto Ontario M5G 2G4 (CA); Dicarlantonio, Ron, Chiyoda-ku (JP); Leonard, Huw, Toronto Ontario M6P 4E1 (CA)
(74) Representative: Watkins, David

(56) References cited:
- US-A1- 2002 133 354
- US-A1- 2004 044 516
- US-B1- 6 556 970
- US-B1- 6 721 706

## Description

### Field of Invention

The invention relates generally to the field of speech recognition. In particular, the invention relates to a method of speech recognition.

### Background of Invention

All modern speech recognition technologies rely on matching user utterances, i.e., spoken words or speeches, to internal representation of sounds and then comparing groupings of sounds to data files of words. The data files may be dictionary files or grammar files.

Dictionary files contain data of sound representations corresponding to individual words. Grammar files contain data of sound representations corresponding to syntactically correct sentence structures. The comparison of the grouping of sounds to the word data may rely on dictionary files, a method commonly referred to as "dictation", or grammar files, a method commonly referred to as "command and control". Typically, either dictionary files or grammar files are used, but not both. In other words, a speech recognition engine tends to use either dictation method or command and control method and rarely mixes these two methods.

When dictionary files are used for pattern matching, groups of sounds are matched against individual words. As individual words are to be matched, the comparison must be made against a large number of sound groupings. In order to be able to identify a match from the large pool, confidence threshold for the comparison tends to be set to a lower value, which generally leads to a lower recognition accuracy.

To improve dictation recognition, a technology called language models may be used. Using this technology, a large number of relevant corpora are first analyzed to generate sophisticated statistical representation of likely sentence construction. The statistical information may include correlation between words, frequency of certain phrases and word patterns or the like. During the process of dictation speech recognition, the statistical information from the language models may be used to weigh matches of group of sounds to groups of words. The additional statistical information permits a threshold higher than that is practical for dictation recognition to be set, thus improving the recognition accuracy.

When creating a language model, relevant corpora, i.e., a collection of written text relevant to a particular knowledge area, may be analyzed. Typically, corpora for creating or establishing language models consist of magazine articles, newspapers or other written material. Once a corpus is compiled, it is often fed to a language model tool or language model generator so that statistical information may be generated from the corpus. However, there tends to be a difference between written expressions and oral expressions. Additionally, there may be a difference between written material and live dialogues. Language models generated from written material therefore may not provide statistical information consistent with spoken language. The recognition accuracy of a conversation tends to suffer as a result.

When grammar files are used, groups of sounds are compared with exact construction of utterances, here generally referred to as grammar rules. Each grammar rule usually contains a fairly limited vocabulary. The small number of words that have to be identified in a grammar rule generally leads to a higher recognition accuracy.

Grammar rules are pattern matching rules that may parse grammatically correct sentences. Grammar rules themselves do not have to be grammatically correct sentences. For example, a grammar rule may have the form

### [I| we| you | he | she | they it] [like | want | prefer | love] [red | blue | yellow | green]

Each pair of brackets represents a placeholder for a word at that position in a sentence. Words enclosed by each pair of brackets are option words that may be selected for that position. The grammar rule shown here may parse correctly the sentences, for example, "I like blue", or "they prefer yellow". Grammar rules permit the construction of a wide range of candidate sentences from a compact representation. Appropriate grammar rules, instead of a large pool of all possible individual candidate words, may be selected for each comparison. As noted, each grammar rule tends to have a far limited number of candidate words. Thus, a relatively higher threshold may be set for a comparison, which generally leads to a higher recognition accuracy.

While the use of grammar files may dramatically reduce the number of candidate words to be matched, i.e., recognized, the construction of grammar rules tends to be tedious and, when created manually, error-prone. For example, each list of option words may require careful consideration during the construction of each grammar rule. When creating grammar rules manually, people may tend not to create grammar rules as complex as possible and as comprehensive as possible by entering as many option words as desirable for each placeholder for all grammar rules. This may limit the range of utterances that may be recognized by a speech recognition engine utilizing these grammar rules. Any errors in the option words entered or omissions of option words from grammar rules may also lead to errors in the recognition result.

In addition, while using grammar files, it is known to direct speech recognition engine to load, i.e., to use, different grammar rules depending on the context of the speech to be recognized. This requires that similar but not identical grammar rules be created for each context that may be anticipated. This may dramatically multiply the task of creating grammar rules manually and tends to make the manual creation of grammar rules even more tedious and error-prone.

While some speech recognition engines may be able to load several different grammar files and arrange them in a hierarchy, i.e., a search sequence, in its search for matches, i.e., search for matches in these grammar files according to a pre-determined sequence, the pre-determined hierarchy may not best suit each actual conversation to be recognized. Additionally, pre-created grammar rules may not be optimally tailored for use by a speech recognition engine in all conversation contexts. It is therefore an object of the present invention to obviate or mitigate the above disadvantages.

In US2002/0133354, a speech center coordinates speech services for a number of speech-enabled applications on a computer system. If a user speaks an utterance, a context manager determines which speech-enabled application should receive a translation of the utterance from a context list, such as by determining the most recently accessed application.

In US2004/0044516 context is determined from the actual contents of the spoken utterance and a context stack is provided, as well as a context weighting approach.

### Summary of Invention

In one aspect of the invention, there is provided a method of speech recognition as defined by claim 1. Optional features are defined by the dependent claims.

### Brief Description of Drawings

For the purposes of description, but not of limitation, the foregoing and other aspects of the invention are explained in greater detail with reference to the accompanying drawings, in which:
Figure 1 is a schematic diagram showing a speech recognition system implemented in an exemplary client/server configuration;
Figure 2 illustrates schematically functional components of a toolkit for preparing data files for use by the system of Figure 1;
Figure 3 shows an exemplary process of generating grammar rules for use by the system of Figure 1;
Figures 4 shows steps of a process of dynamically generating grammar rules for speech recognition and amplification;
Figure 5 shows steps of a process of speech recognition amplification utilizing the dynamically generated grammar rules in the process shown in Figure 4; and
Figure 6 shows schematically steps of a process of creating a dynamic hierarchy of grammar rules for use by the system of Figure 1.

### Detailed Description of Embodiments

The description which follows and the embodiments described therein are provided by way of illustration of an example, or examples, of particular embodiments of the principles of the present invention. These examples are provided for the purposes of explanation, and not limitation, of those principles and of the invention. In the description which follows, like parts are marked throughout the specification and the drawings with the same respective reference numerals.

The invention relates generally to the field of speech recognition. In particular, the invention relates to a method of speech recognition. A system is provided with a module for generating grammar rules automatically from sample utterances. The grammar rules may also be created for any pre-selected context. These grammar rules may be used by a speech recognition engine for improving recognition accuracy. The system is also provided with a module for dynamically generating grammar rules tailored for a context of a conversation. The dynamically generated grammar rule or rules may be provided to the speech recognition engine to further identify words in a partially recognized sentence, i.e., to "amplify" the partial recognition. The system may also be used to track the contexts covered by a conversation and dynamically arrange the hierarchy of grammar files to be searched for matches. Conversations, i.e., dialogues, between a user and the system may also be selectively isolated so that a corpus relevant to a particular knowledge domain may be created from the collection of isolated conversations. The corpus so generated may be used to create or refine language models relevant to the particular knowledge domain.

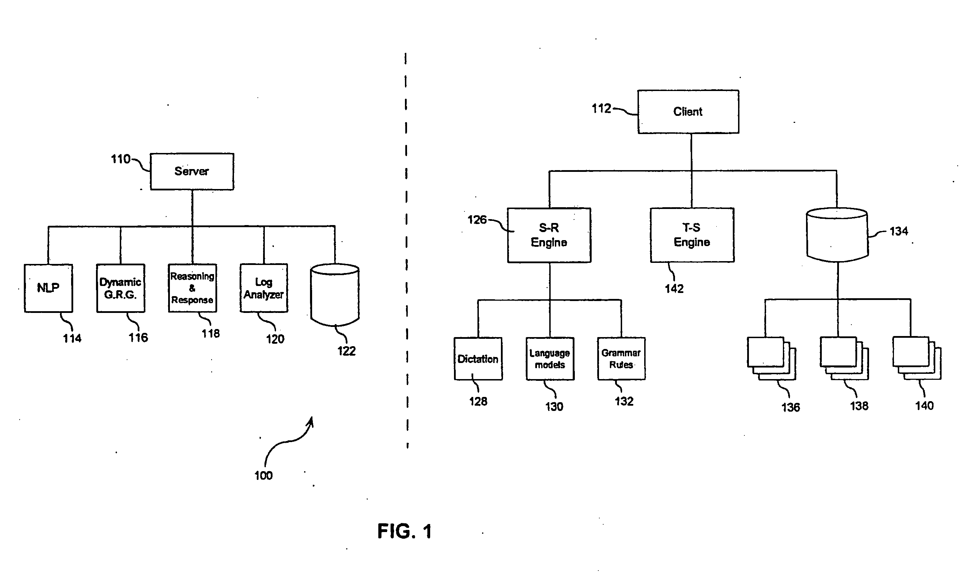

Figure **1** is a schematic diagram showing an exemplary client/server configuration in which system **100** is implemented. To the left of the dotted line is a server portion **110.** To the right of the dotted line is a client portion **112.** It will be appreciated that although system **100** is divided into a server portion **110** and a client portion **112** in this exemplary configuration, the server and client portions both may be hosted on the same hardware. They may also be executed on the same microprocessor. They may even be integrated into a single software application.

System **100** permits a dialogue between a user and the system. In this configuration, client **112** includes a user interface. Any input received from the user, in the form of utterances, i.e., any audible signal representative of spoken words, or speech, is processed by client **112** to convert to text. Client **112** then sends the converted text to server **110.** Server **110** processes the converted text and selects an appropriate response prepared in advance. Server **110** then sends the response to client **112,** which may reply to the user either in a speech format or in traditional written text format.

In addition to its I/O units and control units, server **110** has a natural language processor **114** (NLP), a dynamic grammar rule generator **116,** reasoning and response module **118,** log analyzer **120,** and a server database **122** accessible to server **110.** Each of these components may correspond to a single process executing on a microprocessor (not shown) or may be a module of a software application implementing server **110.** Each of these processes or modules may execute on a single processor or may be distributed over several processors. They may reside in a single local storage media, or may be stored separately in different storage media accessible to a central control module of server **110.**

As will be discussed in greater detail later, server NLP **114** processes any text input received from client **112.** Server NLP **114** processes its input by parsing the input into a dialogue act, with its associated concept list. The combination of a dialogue act and its associated concept list is called a "trigger", or a signature, or an "event". Each trigger is associated with at least one response. All triggers known to the particular application and their associated responses may be stored in server database **122.** Once a matching trigger is found in database **122,** the reasoning and response module **118** identifies a response based on the trigger. The identified response is retrieved from database **122** and sent to client **112.**

The dialogue act here refers to the type of sentence of the input. For example, a sentence "I like blue" may be represented by a dialogue act STATEMENT-DESIRE whereas a sentence "Is it red" may be represented by a dialogue act QUESTION-INFORMATION. Different dialogue acts such as QUESTION-IDENTITY, QUESTION-LOCATION or STATEMENT-ASSERTION may be defined as needed.

Preferably, dialogue acts are pre-defined in server NLP **114.** With pre-defined dialogue acts, server NLP **114** is provided with knowledge or information of how sentences pertinent to each dialogue are constructed. It will be appreciated that dialogue acts may be defined in other parts of the system **100** as well, for example, in the client portion **112,** or may be defined at other times, provided that these dialogue acts are defined and accessible to server NLP **114** when server NLP **114** processes an input sentence.

Concepts refer to words that are derived from keywords in the input sentence. Preferably, each concept refers to a group of keywords expressing the same concept or that are considered equivalent in a particular application of the system, as may be defined by a designer of system **100.** In other words, each concept maps to a group of keywords that all relate to the same concept, or all are considered equivalent. For example, the sentence "I like blue" may be parsed into three concepts, PERSON, DESIRE and COLOR. The concept PERSON may include the words "I", "we", "you", "he", "she", "they", and "it". The concept DESIRE may include the words "like", "want", "prefer" and "love". Like dialogue acts, how these concepts as well as the mappings to keywords are defined may be determined by needs, such as the context or knowledge domain, or areas of application of system **100.** For example, in discussing a corporate structure, PERSON may include "CEO", "chairman" and "president" while in discussing a public transit system, PERSON may include "driver", "station collector" and "passenger".

Certain concepts may be considered to be a fundamental part of a dialogue act. For example, the concept DESIRE may be considered to be fundamental to the dialogue act STATEMENT-DESIRE. Accordingly, when defining the dialogue act, the concept DESIRE may be integrated into the dialogue act. As the concept is now represented by the dialogue act, the concept list needs not to include DESIRE. Accordingly, the corresponding trigger will not include this concept. When the system searches for a matching trigger based on an input sentence as described below, the concept list to be matched will be shorter.

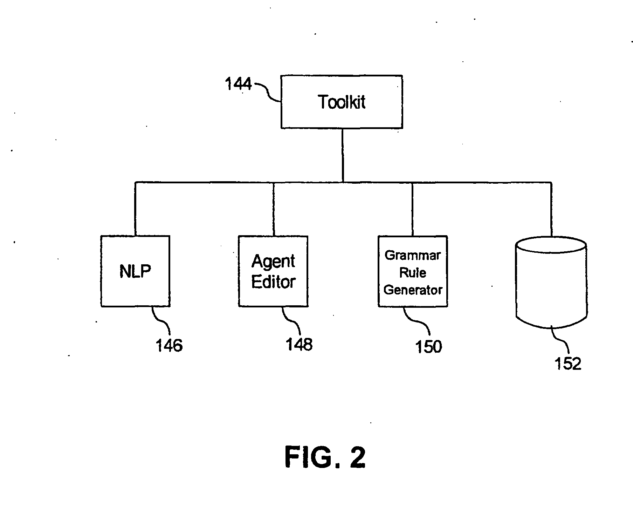

As indicated, each trigger is associated with at least one response. All possible constructions of a sentence from a trigger are considered to be equivalent to each other. How a trigger and its associated responses may be prepared will be described in greater detail later in reference to Figures 2. Once server **110** receives a user input, it may queue the input in an event queue and process the input when the event reaches the top of the queue; server **110** may also process the input immediately. The reasoning and response module **118** analyses the user input and attempts to find a matching trigger from the collection of triggers stored in server database **122.** If a match is found, the reasoning and response module **118** finds from server database **122** all corresponding responses. In case there is only one response, the response is sent to client **112.** If multiple responses are found, a response may be selected based on a pre-determined algorithm. The pre-determined algorithm may be simply a random selection of a response from the multiple responses. Alternatively, a more sophisticated algorithm may be employed. For example, if a response has been provided to the user in response to the same user input, a different response may be selected. Or, a response may be selected based on some other conditions relating to the dialogue, the user or the system, such as the context or ambient temperature of the environment of the user detected by system **100.** These conditions and algorithms may be programmed into reasoning and response module **118,** or may be configured when system **100** is prepared for a particular application.

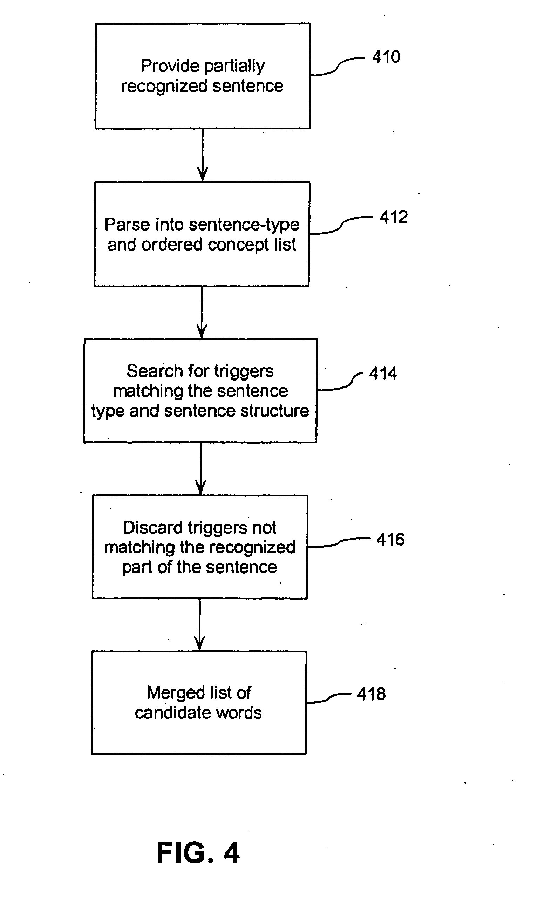

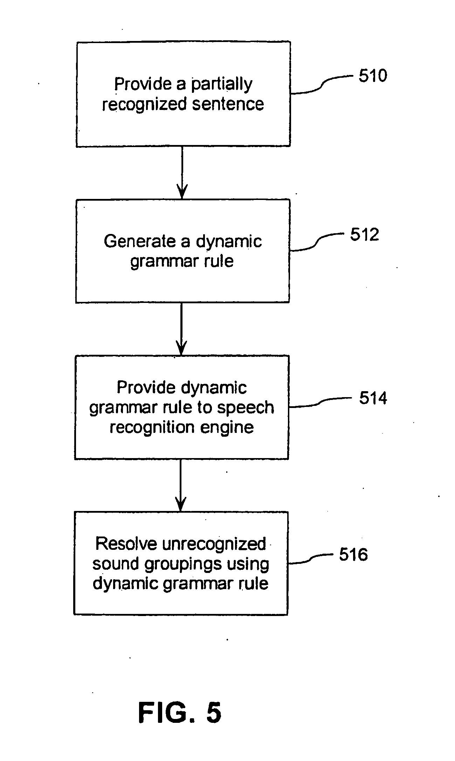

Dynamic grammar rule generator **116** generates grammar rules dynamically based on partially recognized sentences. Dynamic grammar rules are sent to client **112** for "amplifying" the partial recognition, i.e., to fully resolve the unrecognized words. The process of generating grammar rules dynamically and the use of dynamic grammar rules are more fully described in association with Figures 4 and 5.

System **100** provides a log analyzer **120.** The purpose and the function of the log analyzer **120** are to extract from the system log file a complete and isolated dialogue between a user and system **100.** As will be described in more detail later, dialogues isolated from the system log may be used to create or refine language models to improve the accuracy of speech recognition.

Client portion **112** hosts a software application for interacting with a user. The client software application, or client **112** as will be used interchangeably hereafter, includes a user interface for interacting with the user. The user interface may be an interactive web page, a cell phone, or a navigation system installed in a can. It may also be a software application installed in a personal computer or a computer workstation. The client software application may execute on a local processor, or may execute on the same processor as a server software application. It may be stored locally or may be stored in a remote storage area accessible to the processor executing the agent software application.

Client **112** includes a speech recognition engine **126.** Speech recognition engine 126 accepts speech inputs from a user and converts the speech, or utterance of the user, into text. Speech recognition engine **126** may be any generic speech recognition engine prepared by a third party supplier, or a speech recognition engine tailored for the application of system **100.**

Speech recognition engine **126** may perform its speech recognition using dictation mode; it may also amplify its result using language model technology or using grammar rules. Speech recognition engine **126** may have separate dictation module **128,** language model module **130** and grammar rule module **132.** Conveniently, client **112** may also have its own storage media **134** accessible to client **112.** Client storage **134** may be used for storing data files, such as dictionary files **136,** language model files **138** and pre-created grammar files **140.** Grammar files **140** contain grammar rules, generated during the preparation stage, for example, using a toolkit provided by the system, as will be described later.

Grammar files **140** may also contain any context designations associated with individual grammar rules. Context designations may be assigned to grammar rules where the grammar rules are created for the context, or are appropriate for the context. Such grammar files may also be organized in a hierarchy using the context designation based on a pre-determined category hierarchy. For example, separate grammar rules may be created and organized in different grammar files associated with "sports", "ball games", "soccer", "base ball", "chess" and "swimming". These grammar files may be organized in a hierarchy: 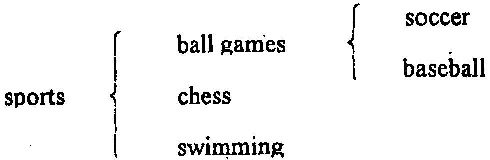

When grammar files are grouped by context, speech recognition engine **126** preferably searches grammar files in an optimized sequence in order to reduce recognition time. As noted, different grammar rules may be assigned different contexts to and grammar rules may be grouped together and stored in different grammar files based on their designated contexts. Speech recognition engine **126** would not have to search all grammar files; instead, it may be possible for it to search a subset of grammar rules relevant to the context and still be able to find a correct match. For example, in a discussion of soccer, a search for matches in grammar files may start from "soccer", then in "ball games" and then in "sports". Alternatively, a search may start from "sports", then in "ball games", and finally in "soccer". How each context is ranked determines a search sequence. As will be appreciated, a search sequence may be fixed in a number of ways, for example, built into a custom-made system, fixed by a content designer, or configured by a system administrator. It may also be dynamically determined and customized for a conversation session, as will be described later.

Any result generated by speech recognition engine **126** is sent to server **110.** A fully recognized utterance is sent to server **110** as text input so that a response may be returned by server **110,** namely, by its reasoning and response module **118.** A partially recognized utterance is sent to server **110** so that dynamic grammar rules may be generated by the server's dynamic grammar rule generator **116** for use by speech recognition engine to amplify the partially recognized utterance. Conveniently, client **112** may have a text-to-speech engine **142,** for converting to speech any response in text form received from server **110.** This may aid the communication between system 100 and the user.

Figure **2** shows schematically functional components of a toolkit of system **100** for preparing grammar files and other data files for use by system **100.** Conveniently, toolkit **144** includes a toolkit NLP **146,** agent editor **148,** toolkit grammar rule generator **150,** and a toolkit database **152** accessible to toolkit **144.**

Toolkit **144** may be used by a system administrator or content creator to prepare system **100** for a particular application. The application may be an automated information system knowledgeable about a public transit system, a particular sport, or a public company, whose stock may be of interests to investors. In this context, the application is called an "agent". In other words, an agent is a particular application of the system, possessing knowledge in a specified area and responding to user inputs in a pre-defined manner.

Agent editor **148** is used to define an agent. A content creator may use agent editor **148** to enter inputs anticipated from a user. Agent editor **148** may also be used to define, or configure, how system 100 responds to input received from client **112.** The configuration of an agent may include defining anticipated queries or inputs from a user, or sample utterances or sentences, and one or multiple responses associated with any particular user input. For example, when the content creator creates an agent knowledgeable about sports, the content creator may anticipate a question "What is the score?" The agent may respond with a specific score for a particular game, such as a game played by a local team last night, or the score of a final game of a World Cup Championship match. Both the anticipated question and the corresponding response may be entered by the content creator using, for example, agent editor **148.**

An appropriate response to the same question may be different in different context. For example, the final score of a game played by the local team last night may be an appropriate response to the question "What is the score?" in the context of discussing the local team's performance, but may not be appropriate if the context is the World Cup Championship. An appropriate response to a user input therefore may require different information, depending on the context. It is preferable that a context designation is assigned to each anticipated user input and the corresponding response(s), so that an appropriate response may be selected based on the context. Context designations may be entered using agent editor **148.**

Toolkit NLP **146** parses, i.e., analyzes and breaks, each anticipated user input into a dialogue act and its associated concept list. As described earlier, a dialogue act is a reference to the type of a sentence. Like dialogue acts for server NLP **114,** preferably, these dialogue acts are pre-defined in toolkit NLP **146.** Preferably, same set of dialogue acts are pre-defined for both server NLP **114** and toolkit NLP **146.**

Each concept is a reference to a group of keywords expressing the same concept, as defined by the content creator, or keywords that are considered equivalent, or at least related, to the concept by the content editor. Mapping from keywords to concepts may also be entered, i.e., defined by content creator using agent editor **148,** based on the needs of the knowledge contents to be created.

For example, toolkit NLP **146** may parse the sentence "I like blue" into a dialogue act STATEMENT-DESIRE and a list of three concepts, PERSON, DESIRE and COLOR. Preferably, the pre-defined dialogue act STATEMENT-DESIRE may have the concept DESIRE incorporated into the dialogue act, thus leaving a list of only two concepts. The content creator may use agent editor **148** to include the keywords "I", "we", "you", "he", "she", "they", and "it" in the concept PERSON, for example. As another example, the question "What is the score?" may be parsed into a dialogue act QUESTION-INFORMATION containing a concept SCORE. In a discussion of sports, the concept SCORE may include keywords "score" and "result".

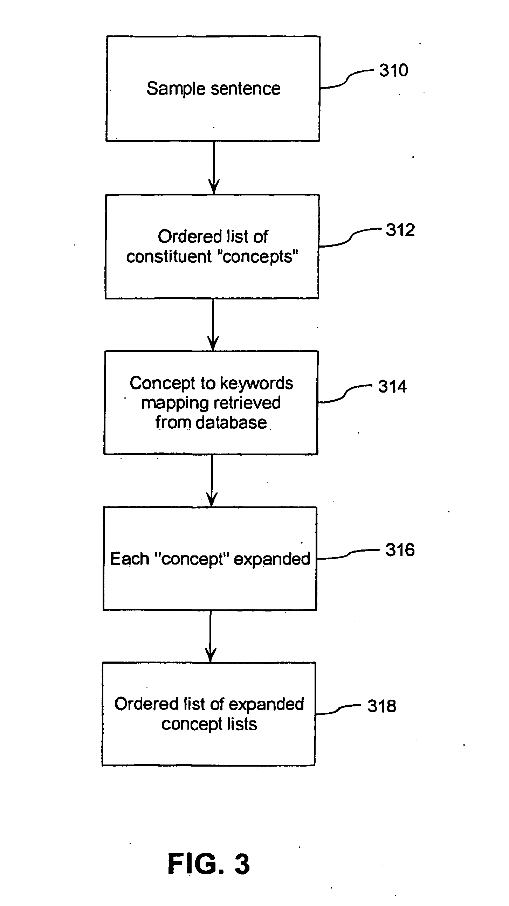

Based on the dialogue acts and the concept lists, a grammar rule may be generated using toolkit grammar rule generator **150** from the sample utterance. Grammar rules so created may be used by speech recognition engine **126** subsequently as pattern matching rules to match any likely sound groupings. The generation of grammar rules is described in full detail in reference to Figure 3.

The collection of all triggers, corresponding responses, keywords to concept mappings and the grammar rules determines the knowledge domain of an agent. Conveniently, an agent so defined may be "published" to the server, i.e., triggers, responses, and keywords to concept mappings may be stored in server database **122.** Grammar rules may be saved in grammar files **140** locally on the client side. If different contexts are assigned to different grammar rules, these grammar rules may be grouped by context designation and stored in different grammar files, each associated with a context designation. Keywords to concept mappings may have separate copies saved in client storage **134** such as in a database and toolkit database **152** as well. It will be appreciated that all information related to an agent may also be stored in a single storage media accessible to server **110,** client **112** and toolkit **144.**

It will be appreciated that like dialogue acts for server NLP **114,** these dialogue acts may be defined at other times as well, provided that these dialogue acts are defined and accessible to toolkit NLP **146** when toolkit NLP **146** processes a sample sentence. In addition, concepts considered fundamental to a dialogue act may be incorporated into the dialogue act, without being listed in the concept list. Further, it is preferred that dialogue acts saved in server database **122** are identical to dialogue acts saved in client storage **134** and that the keywords to concept mappings saved in server database **122** are also identical to that saved in client storage **134.**

Referring to Figure **3****,** a process of generating grammar rules from anticipated user input, or sample utterance is described. At step **310,** the content creator provides a sample utterance using agent editor **148.** The sample utterance is processed by toolkit NLP **146** to parse the sentence into a dialogue act and its associated constituent "concepts" at step **312.** For example, the sample utterance might be:
I like blue.
   In this case, the dialogue act might be STATEMENT-DESIRE and the concept list may include the following constituent keywords:
I, like, blue

Each of these constituent keywords corresponds to a "concept." Toolkit grammar rule generator **150** retrieves from toolkit database **152** the concept to keyword mappings for each of these constituent keywords at step **314.** These mappings are used to first match each of the constituent keywords to a concept. As there is a mapping from the keyword to a concept, each of the constituent keywords is also referred to as a constituent "concept" in the following. The same concept to keywords mapping is then used to map the matched concept to a list of keywords. The result is that each constituent keyword is expanded to a list of corresponding keywords (step **316).** An ordered list of keyword lists is thus obtained, corresponding to a grammar rule (step **318).** If the concept to keyword mapping is defined for a specific context, the grammar rule obtained may be assigned a context designation corresponding to the context. If a generic mapping is used but the grammar rule is generally applicable in a specific context, such as sport, the grammar rule may also be assigned a context designation corresponding to the appropriate context.

For example, the keyword "I" may be mapped to concept PERSON. The content creator may define PERSON to include the keywords "I", "we", "you", "he", "she", "they", and "it", i.e., consider PERSON to be equivalent to these keywords. In other words; the content creator may define that the concept PERSON maps to a list of keywords "I", "we", "you", "he", "she", "they", and "it". Consequently, toolkit grammar rule generator **150** maps, or expands, the keyword "I" to the keyword list "I |we |you | he | she | they | it". Similarly, the keyword "like" may be matched to concept DESIRE which maps to keywords "like", "want", "prefer" and "love". Toolkit grammar rule generator **150** consequently maps, or expands, the keyword "like" to a list of keywords "like | want | prefer | love". Similarly, toolkit grammar rule generator **150** may match keyword "blue" to concept COLOR which corresponds to a keyword list "red | blue | yellow | green". Each of the constituent keywords of the anticipated user input, or sample utterance, is mapped to its corresponding list of keywords. Once each concept is replaced with its corresponding keyword list, a grammar rule is obtained. The grammar rule for the sample utterance:
I like blue.
   may thus have the following form:
   [I | we | you | he | she | they | it] [like | want | prefer | love] [red | blue | yellow | green]

The grammar rule so generated provides a much broader representation of the type of input sentence being entered. The broadening of scope occurs at the "concept" level. As each "concept" can be associated with as many keywords as necessary or desirable, the grammar rule generated may be as comprehensive as possible or desirable. In addition, as the expansion of scope occurs at the "concept" level, and the generation of grammar rules is automatic, the grammar rule generated tends to be more consistent than that created manually and tends to be more comprehensive as well. In addition, as the expansion occurs at "concept" level, people tend to be less discouraged to create complex grammar rules, as the assembling of complex grammar rules from concepts is performed by computer.

As described, grammar rules may be generated during the initial stage when a content creator prepares the system for a particular application or agent. Speech recognition engine **126** may use grammar rules to complement its dictation speech recognition.

Referring to Figure **4****,** there is shown a process of dynamically generating grammar rules. Dynamic grammar rules may be used by speech recognition engine **126** to resolve partially recognized utterances and to improve recognition accuracy.

When speech recognition engine **126** is only able to recognize partially a sentence or utterance, the partially recognized sentence or utterance is sent to server **110** (step **410).** The sentence structure of the partially recognized sentence is analyzed, i.e., parsed by server NLP **114** to determine its dialogue act type, where possible, and its associated concept list (step **412).** In particular, the partially recognized sentence is parsed by server NLP **114** to identify the number of concepts in the partially recognized sentence. In addition, the locations of unrecognized words are also identified during this step. Not all concepts may be resolved, however, because of unrecognized words. Each of the unrecognized words is assigned a placeholder, together with a location index to indicate its location in the partially recognized sentence. For example, the last two words of the following question are not recognized:
What was_ _
   This may be recognized as a QUESTION-INFORMATION type dialogue act. Four concepts are identified, with the last two concepts not recognized. The first unrecognized word, represented as a blank "_" above, is placed into a placeholder with a location index "3" to indicate that it is the third word in the sentence. The second unrecognized word, represented as a blank "_" as well, is placed into a placeholder with a location index "4" to indicate that it is the fourth word in the sentence.

Next, at step **414,** dynamic grammar rule generator **116** searches in server database 122 for triggers matching this pattern. Triggers that have the same dialogue act type and same sentence structure will be matched at this step. For example, in this case, the dialogue act is QUESTION-INFORMATION. The sentence as may be determined contains four concepts. Thus, server database 122 is searched for all triggers that contain four concepts of the type QUESTION-INFORMATION. The search may produce a list of matched candidates of dialogue acts with their associated concept lists. All matched triggers may be potential candidates.

As mentioned earlier, certain concepts considered fundamental to a dialogue act may be integrated into the dialogue act and not included in the concept list. In this example, the concepts "what" and "is" may be considered so fundamental to a QUESTION-INFORMATION type dialogue act such that they may be extracted from the concept list and integrated into the dialogue act. Accordingly, the type of matched dialogue acts may have only two placeholders, in this case, both corresponding to unrecognized words.

Preferably, at step **416,** any trigger that does not match the partially recognized sentence may be discarded. For example, any dialogue act corresponding to "who is the pitcher" would be discarded, as "who is" does not match the recognized words "what was".

The remaining triggers are processed to extract a list of concepts corresponding to the third concepts and a list of concepts corresponding to the fourth concepts, because in this case, the unrecognized words of the input sentence are third and fourth in the sentence. All keywords corresponding to the third concepts are merged to form a single keyword list to replace the first blank of the partially recognized sentence; all keywords corresponding to the fourth concept are merged to form a single keyword list to replace the second blank (step **418).** A dynamic grammar rule so generated has the form:
What was **[first list of keywords] [second list of keywords]**
which may look like:
What was [the | that | ... ] [score result |...| time | station ... ]

This grammar rule may contain a large number of candidate words in each of the placeholder corresponding to an unrecognized word. Preferably, the size of the grammar rules may be further reduced by further limiting the matched candidates, i.e., by discarding candidates that likely may not be relevant. Different techniques may be used to discard likely irrelevant candidates. For example, at step **416,** triggers that do not have the same context may be discarded. In the context of discussing a soccer game, knowledge about the next station of a train in a public transit system tends to be less relevant and triggers having a context designation of "public transit system" may be discarded without significantly affecting the accuracy of amplification. As described later, the system maintains a context history of the current conversation. Alternatively, triggers that do not correspond to any of the contexts appearing in the context history may be discarded. Similarly, concepts associated with contexts not relevant to the present context likely may not provide a matching word and may be discarded. Again, using the example above, concepts associated with "station" may be discarded without significantly affecting the accuracy of amplification.

One use of dynamically-created grammar rules is to amplify partially recognized speeches, or to fully resolve unrecognized sound groups in a partially recognized speech. Referring to Figure 5, there is shown steps of a process of the speech recognition amplification utilizing the dynamically generated grammar rule in the process shown in Figure **4****.**

For example, while discussing soccer, speech recognition engine **126** is only able to recognize a sentence partially as follows:
What was_ _
   The blanks "_" represent words not recognized by speech recognition engine **126.** System **100** queues this partial recognition in an event queue of server **110** as a request for amplification. Once server **110** reaches this request in the event queue, the partially recognized sentence is provided to server **110,** or server NLP **114** (step **510).** Server NLP **114** parses the partially recognized sentence into a dialogue act and associated concept list. Following the steps described in reference to Figure **4****,** dynamic grammar rule generator **116** produces a dynamic grammar rule (step **512)** in a form, for example:
   What was [the | that | ... ] [score | result |...| time ... ]

This dynamic grammar rule is forwarded to client **112** (step **514).** Speech recognition engine **126** may use the dynamic grammar rule to reprocess the partially recognized sentence, i.e., to amplify the partially recognized sentence by comparing unrecognized sound groupings with the last of candidate words (step **516).** It will be appreciated that the dynamic grammar rule may be passed to speech recognition engine in different manners. Client **112** may save it as a local file for use by its speech recognition engine **126.** Server **110** may also save the dynamic grammar rule on the server side as a temporary grammar file, for speech recognition engine **126** to load remotely. Or, server **110** may simply retain it in the server memory, and direct the speech recognition engine **126** residing on client **112** side to retrieve it from the server's memory.

When a dynamic grammar rule is passed to speech recognition engine **126,** preferably, speech recognition engine **126** searches the dynamic grammar rule first to find a match. The dynamic grammar rule is generated from the partially recognized speech and is based on the present context of the conversation between the user and the system. The dynamic grammar rule so generated tends to contain a far limited number of words, as compared with all pre-generated grammar rules pertinent to the contexts of the conversation. Searching dynamic grammar rules first tends to reduce speech recognition time.

As noted, a search sequence of grammar files may be pre-determined for each session of interaction between a user and the system, based on, for example, a hierarchy of contexts assigned to grammar files. Such a pre-determined sequence, however, may not best suit all conversations. System 100 may generate dynamically a search sequence based on the conversation contexts to further improve recognition time and accuracy.

Server **110** may conveniently keep a history of all contexts that have been traced during a conversation. For example, a conversation may start from a generic topic, then switch to weather, then to stock, sports, baseball, and then followed by a discussion about soccer. The context history path would then be general-weather-stock-sports-baseball-soccer. Based on this path, a new hierarchy of grammar files may be established, namely, in the order:
1. Soccer
2. Baseball
3. Sports
4. Stocks
5. Weather
6. General

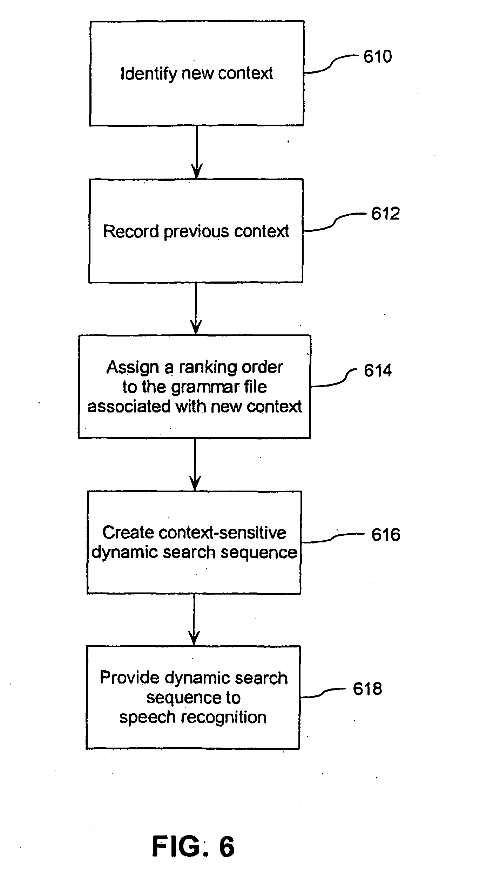

Referring to Figure 6, there is shown schematically a process of creating a dynamic search sequence of grammar rules for use by the system of Figure 1. During each session between a user and the system, server **110** keeps track of a history of context of the conversation. Each time the reasoning and response module **118** receives a user input, it identifies the context of that input (step **610).** If the user input has a context different from that of the previous input, server **110** records the previous context (step **612)** and adds this new context to the context history list. Server **110** also assigns a ranking order to the grammar file associated with this context (step **614).** This way, a new context-sensitive search sequence of grammar files may be created (step **616).** Grammar files are searched following this search sequence, starting from a grammar file that has the highest ranking order to grammar files having lower ranking orders until the grammar file that has the lowest ranking order is searched.

The context-sensitive search sequence may be created based on a variety of algorithms. For example, the ranking order may be assigned simply corresponding to how recent a particular context was discussed. In the example above, the discussion follows the path of general, weather, stocks, sports, baseball, and soccer, with soccer as the most recent context. The search sequence may be to search grammar files associated with soccer first, then grammar files associated with baseball, then sports, then stocks, then weather, and finally a general topic. This hierarchy, or search sequence, may be further modified by the frequency the conversation revisited or length of time the conversation spent in a context. For example, if a particular context has been revisited many times or have been discussed for a long period of time during the same conversation, that context may be promoted to be searched ahead of other contexts or other grammar files despite not being the most recent context.

This dynamic search sequence is passed by server **110** to client **112** for use by the speech recognition engine **126** (step **618).** Speech recognition engine **126** uses the dynamic search sequence when searching grammar files for matching sound groups. The dynamically created hierarchy has an advantage of being more relevant to the particular conversation between the user and the system. As can be appreciated, a match may be more likely to be found in the most recent context of the conversation. It may also be more likely to be found in one of the contexts of the conversation. It would, however, be less likely a context unrelated to the conversation. A dynamically created search sequence tends to improve recognition time and accuracy. This also reduces the guesswork that a designer otherwise would have to face when pre-establishing a search hierarchy for all grammar files.

In addition, as mentioned earlier, the context history may also be used to generate dynamic grammar rules. One use is to limit the number of candidates by discarding candidates that may not be likely relevant based on the context history, as described earlier. The other use is to rank the words in a merged word list. As described earlier, a merged word list is produced for each unrecognized word, or sound grouping. The merged word list contains words extracted from keywords in concept to keywords mappings. Words in the merged word list may be ranked based on the dynamic search sequence. Thus, when the dynamic grammar rule is passed to speech recognition engine **126** to re-process the unrecognized sound groupings, more likely candidate words will be searched first for a possible match.

As described earlier, accuracy of speech recognition may be further improved using a technology called language models. Language models are statistical information about sound groupings of patterns in literals.

"Literals" here refers to literal texts, whether spoken or written. The literals provide relevant corpora. The corpora are provided to language model generators to create or refine language models for a specific context or area of "knowledge". It is generally tedious to enter a large pool of literals or relevant corpora for generating relevant statistical information. The system provides a module for compiling literals. In the embodiments described here, the literals include three parts: sample utterances, agent's responses, and user's input.

While sample utterances (and agent responses) may be directly added to the literals, system **100** conveniently provides log analyzer **120** for extracting user input. System **100** may conveniently keep a log of every event and save the system log in a log file. These system events may include, for example, a mouse click, opening of a file, expiry of a timer, or user's speech input and system's responses. Log analyzer **120** analyses the system log and then identifies a thread of conversation from the system log. In other words, log analyzer **120** separates the user input, whether as text input or as text of recognized speech, and the corresponding system response from the system log and group them into threads of conversations. Each thread of conversation would then be a faithful record of the conversation between the user and the system and may be added to the literals or the corpora for creating language models.

For example, a conversation could start with a greeting by the agent, followed by a question from the user and a response generated by the reasoning and response module **118.** It then may be followed by a further question from the user, followed by a further response generated by the reasoning and response module **118,** Once a separate conversation thread, i.e., a representation of an actual conversation between the user of the system and the response of the system, is extracted from system log, the separate conversation thread may be provided to speech recognition engine **126** or a separate language model generator.

Several advantages may follow from extracting "literals" from system logs. First, it avoids the need of manually entering "literals", a tedious and error-prone process. Second, the log is a more accurate reflection of oral communication between a user and the system, rather than a representation of some written communication, included merely for its relevance to the knowledge area. Third, the literals reflects the real-life inputs from possibly a large number of system users, not the result of creative imagination of perhaps intelligent but a very small number of content creators. The language models created or refined tend to be more accurately reflect real-life conversations, which helps improve the accuracy of speech recognition.

In operation, an administrator or designer of an application of the system first configures the system for a particular application, i.e., defines an agent. As described, an agent is defined by its area of knowledge and its responses to input received from users. In its area of knowledge, the agent "understands" the user input and is able to provide a sensible response. An agent may be defined in a number of ways. Typically, using the toolkit **144** provided, a designer first defines a set of concepts relevant to the area. The designer then uses toolkit **144** or agent editor **148** of toolkit **144** to define a set of concept to keyword mappings for these concepts. Then, the designer enters sample utterances that are considered relevant to the knowledge area. The sample utterances may also correspond to the type of anticipated user input. Toolkit NLP **146** is used to parse each sample utterance into a sentence type, or dialogue act, and the associated ordered concept list, thus defining a trigger. For each trigger, the designer may enter one response, or several responses together with an algorithm for selecting a response from among the several possible responses. When the designer is satisfied that all desirable concept to keywords mappings, triggers and their associated responses are entered, the designer "publishes", i.e., uses toolkit **144** to convert and save the concept to keywords mappings, triggers and their associated responses to the server database **122.** This completes the definition or configuration of an agent, i.e., the configuration of the system for a particular application in a specific knowledge area.

To improve the accuracy of speech recognition in this specific knowledge area, speech recognition engine may make use of grammar files. Although grammar files may be created manually, it is preferred to use toolkit **144** to at least partially automate the creation of grammar files. Conveniently, the designer uses toolkit NLP **146** to parse a sample utterance into an ordered list of concepts. Grammar rules can be generated automatically using concept to keywords mappings. The designer may generate grammar rules when a sample utterance is entered and a trigger is generated, or may generate grammar rules when all sample utterances have been entered. These grammar rules are static grammar rules. They tend not to be modified during each session of interaction between an agent and a user, or even across sessions of interaction between the agent and different users. These grammar rules generated automatically using toolkit NLP **146** are stored as one grammar file or several grammar files. Static grammar rules may be grouped and stored as different grammar files according to the grouping. The grouping may be based on category or sub-fields of the knowledge area; it may also be based on a defined "context" as derived from context designation assigned to a grammar rule or assigned to concept to keywords mappings used to generate a grammar rule.

Once an "agent" is "published" and the related grammar files are stored, the system, or the agent, is ready to interact with a user. The system may interact with a user in different manners. In other words, the system may have different types of user interfaces. The user interface may be text based; it may also be speech based. For example, a user interface may be a computer terminal connected to client **112,** providing a text input form, or a web-based input form allowing a remote user to enter text queries. A user interface may also be a microphone, or other speech sensing device, coupled to a speech recognition engine **126** so that direct speech input may be entered. A user may initiate a dialogue with the agent by first entering a statement or question through the web-based input form. The user may also directly speak to the agent if the agent is equipped with a speech recognition engine **126.** If text input is entered, system **100** will provide a response if the subject matter of the input belongs to the area of knowledge of the agent. If a speech is provided as an input, system **100** first converts the speech to text format using its speech recognition engine **126** and then provides a response based on the recognized speech.

In a system implemented using the client/server configuration of Figure **1****,** speech recognition engine **126** on the client side converts a user's speech to text which is then forwarded to the server **110** for processing. If the user's speech is not fully recognized, the partially recognized speech is first forwarded to server **110** for amplification. Server **110'**s dynamic grammar rule generator **116** generates a dynamic grammar rule based on the partially recognized speech, following the steps described in connection with Figure **4****.** The dynamic grammar rule is forwarded to speech recognition engine **126** for use to re-process the partially recognized speech, i.e., to resolve groups of sounds into words that were not resolved in the previous pass of recognition, following steps of the process as described in connection with Figure 5. If the speech is still not fully recognized, the partially recognized speech, with more words recognized this time, may be sent to server **110** to generate yet another dynamic grammar rule for speech recognition engine **126** to re-process the partially recognized speech again. This process may be repeated until the speech is fully recognized, at which time, the text of the recognized speech is sent to server **110** for selecting a response.

Where the speech is fully recognized, server **110** processes the recognized speech to provide a response. First, the text of the recognized speech is parsed into a sentence type and its associated concept list by server NLP **114,** i.e., the text is first converted into a "trigger" by server NLP **114.** Server **110**'s reasoning and response module **118** then finds in server database **122** a match for the input trigger from the collection of triggers "published" to it using toolkit **144.** As described, each trigger is associated with a response, or several responses together with an algorithm for selecting a response from these responses. The response associated with the trigger, once selected, is sent back to client **112.** Client **112** may display the response to the user in text format or convert it into speech using its text-to-speech engine **142.** Meanwhile, system **100** logs the recognized speech and the selected response to the system log.

A context can be determined from the recognized speech and the selected response. It may be determined, for example, from the context designation associated with the matched trigger as assigned by the agent designer. The context may also be determined dynamically from the list of concepts that occur in the user input. For example, if a user input contains several concepts relating to sport and one relating to hockey, the context may be determined to be related to "sport", or one of its sub-category, "hockey". The context is recorded in a context history log if the present context is different from the context associated with the previous user input. The context history may be used by system **100** to formulate a dynamic search sequence for searching, or loading, grammar files, as described in connection with a process shown in Figure **6****.** As will be appreciated, the search sequence may be generated by the server or the client, although Figure 6 shows a process in which server **110** generates the search sequence.

The designer or administrator of the application of the system uses log analyzer **120** to extract individual dialogues from the system log. After an interaction session between the agent and the user is completed or after several such sessions are completed, A "literal" that may be used for establishing or refining language models may be compiled from these separate dialogues. The designer of the agent may provide the literals so compiled to a language model generator to establish language models, if no language model is created yet; or to refine language models, if at least one language model has been established. The designer may, of course, use the collection of sample utterances and designed responses to establish a language model, prior to any interaction session between a user and the agent, as sample utterances and designed responses all belong to the area of knowledge of the agent.

Various embodiments of the invention have now been described in detail. Those skilled in the art will appreciate that numerous modifications, adaptations and variations may be made to the embodiments without departing from the scope of the invention. Changes in and or additions to the above-described best mode may be made without departing from the scope of the invention, which is defined by the appended claims.

In addition to the various embodiments of the invention described above, the following examples are disclosed. An example includes a speech recognition system for providing a textual output from an audible signal representative of spoken words, said system comprising, a natural language processor for parsing a partially recognized sentence into a sentence type and an associated ordered list of recognized words and unrecognized sound groupings, said sentence type having an ordered list of concepts, said partially recognized sentence corresponding to the audible signal; a grammar rule generator for expanding each of said concepts at a location corresponding to one of said unrecognized sound groupings into a plurality of related words; a speech recognition engine for converting the audible signal to the textual output, said speech recognition engine being operatively connected to said plurality of related words for resolving the one of said unrecognized sound grouping.

A further example includes a system for improving recognition accuracy of an audible signal representative of spoken words, the audible signal being converted to a textual output by a speech recognition engine, said system comprising, a natural language processor for parsing a sentence in a textual format into an ordered list of keywords; a grammar rule generator for expanding each 4933074v.1 keyword of said ordered list into a plurality of related words to obtain a grammar rule from said ordered list of keywords; wherein said speech recognition engine is operatively connected to said grammar rule for resolving unrecognized sound groupings in the audible signal into the corresponding spoken words in the textual output.

The system preferably further comprises an editor for preparing concept to keywords mappings, wherein said expansion of each keyword into said plurality of related words corresponds to matching each said keyword to a concept and replacing said concept with keywords using a corresponding concept to keywords mapping.

The system preferably includes the grammar rule having a context designation assigned thereto.

The system further preferably is operable to determine a conversation context of the spoken words, and said speech recognition engine is operable to select said grammar rule if said context designation matches said conversation context.

A further example is a method of generating a grammar rule for use by a speech recognition engine, said method comprises the steps of, parsing a sample sentence using a natural language processor into an ordered list of keywords; matching each keyword of said ordered list to a concept using a concept to keywords mapping; and producing the grammar rule from said ordered list by replacing each said concept with a list of keywords using the concept to keywords mapping.

The method preferably further comprises the step of assigning a context designation to said grammar rule.

The method also preferably specifies that concept to keywords mapping has a context attribute and the context designation assigned to said grammar rule corresponds to said context attribute.

The method further preferably comprises the step of preparing a plurality of concept to keywords mappings.

An example includes speech recognition method for resolving unrecognized sound groups in a partially recognized speech using concept to keywords mappings and sentence types, each sentence type having a plurality of associated grammar rules, the grammar rules being expressed in concepts, said method comprising the steps of, parsing the partially recognized speech using a natural language 4933074v.1 processor into a predetermined sentence type and an associated ordered list of recognized words and the unrecognized sound groups; selecting a list of grammar rules associated with the sentence type from a plurality of grammar rules, each grammar rule of said list having a plurality of constituent concepts, each of said constituent concepts corresponding to one of the recognized words and the unrecognized sound groups; for each said unrecognized sound group, merging said corresponding constituent concepts in all said selected grammar rules into a list of concepts; expanding said list of merged concepts using the concept to keywords mappings to produce a list of candidate words; and resolving each said unrecognized sound group using the list of candidate words.

The speech recognition method preferably comprises the step of preparing a plurality of concept to keywords mappings prior to the step of expansion.

The speech recognition method preferably specifies that the step of selecting said list of grammar rules includes the steps of comparing the partially recognized speech with each of the plurality of grammar rules and discarding any grammar rules that do not match the partially recognized speech.

The step of comparing preferably includes comparing sentence types and the step of discarding preferably includes discarding grammar rules that do not have the same sentence type as the partially recognized speech.

The step of comparing can also preferably include comparing the partially recognized speech with said constituent concepts of each of the plurality of grammar rules and the step of discarding can preferably include discarding grammar rules that do not match any recognized words in the partially recognized speech.

The speech recognition method further preferably comprises the step of determining a conversation context of the partially recognized speech, wherein each of said selected grammar rules further has a context designation and the step of comparing including comparing the context designation with the conversation context and the step of discarding includes discarding grammar rules that do not have the conversation context matching the context designation.

A further example is a method for generating a dynamic grammar file for use by a speech recognition engine to resolve unrecognized sound groups in a speech using concept to keywords mappings and sentence types, each 4933074v.1 sentence type having a plurality of associated grammar rules, the grammar rules being expressed in concepts, said method comprising the steps of, parsing the partially recognized speech using a natural language processor into a predetermined sentence type and an associated ordered list of recognized words and the unrecognized sound groups; selecting a list of grammar rules associated with the sentence type from a plurality of grammar rules, each grammar rule of said list having a plurality of constituent concepts, each of said constituent concepts corresponding to one of the recognized words and the unrecognized sound groups; for each said unrecognized sound group, merging said corresponding constituent concepts in all said selected grammar rules into a list of concepts; and generating the dynamic grammar rule from said ordered list by replacing each concept of said list of merged concepts with a list of keywords using the concept to keywords mappings.

The method preferably further comprises the step of assigning a context designation to said dynamic grammar rule.

The concept to keywords mapping preferably has a context attribute and the context designation assigned to said dynamic grammar rule corresponds to said context attribute.

The method preferably further comprises the step of preparing a plurality of concept to keywords mappings.

The step of selecting said list of grammar rules preferably includes the steps of comparing the partially recognized speech with each of the plurality of grammar rules and discarding any grammar rules that do not match the partially recognized speech.

The step of comparing preferably includes comparing sentence types and the step of discarding includes discarding grammar rules that do not have the same sentence type as the partially recognized speech.

The method can further include the step of comparing includes comparing the partially recognized speech with discarding includes discarding grammar rules that do not match any recognized words in the partially recognized speech.

The method can also include the step of determining a conversation context of the partially recognized speech, wherein each of said selected grammar rules further has a context designation and the step of comparing including comparing the 4933074v.1 context designation with the conversation context and the step of discarding includes discarding grammar rules that do not have the conversation context matching the context designation.

Another example is a method of speech recognition, said method comprising the steps of: preparing a plurality of grammar rules, each of said plurality of grammar rules having a context designation assigned thereto; determining a conversation context of a speech being recognized by a speech recognition engine and recording said conversation context in a context history; if said conversation context corresponds to one of said context designations, assigning a ranking order to said context designation in a search sequence as a function of said context history; and directing said speech recognition engine to search said plurality of grammar rules following said search sequence.

The method can also preferably specify that said ranking order correlates to;
(i) how recent said conversation context appears in said context history;
(ii) how frequent said conversation context appears in said context history; or
(iii) total length of time said conversation context represents in said context history.

A further example includes a method of compiling a corpus for use by a language model generator, said method comprising the steps of, storing text of user input from a user and response to said user input generated by a knowledge base system in a log file; extracting a thread of conversation between said user and said knowledge base system, said thread of conversation containing literal texts of said user input and said system response; and adding said thread of conversation to said corpus.

The method preferably further comprises the step of recognizing said user input as a speech using a speech recognition engine, wherein the step of storing includes storing text of the recognized speech of said user.

The method can specify that said system response is extracted from a database of pre-preprogrammed responses.

The method can also preferably further comprise the step of preparing a plurality of pre-programmed responses; and adding all said pre-programmed responses to said corpus.

An example is a method for improving recognition accuracy of a speech recognition system, the speech recognition system having a speech recognition engine for converting audible signal representative of spoken words into a textual output, the method comprising the steps of, selecting a first plurality of concepts; preparing a second plurality of concept to keywords mappings, each concept of said first plurality of concepts having at least one concept to keywords mapping; defining a third plurality of sentence types, each sentence type being associated with an ordered list of concepts, said ordered list of concepts being formed from said first plurality of concepts; providing said first plurality of concepts, said second plurality of concept to keywords mappings and said third plurality of sentence types, together with said associated ordered lists of concepts, to the speech recognition system for resolving unrecognized sound groupings in the audible signal.

The method preferably further comprises the steps of, entering a sample utterance, parsing said sample utterance into a sentence type and an associated ordered list of concepts using a natural language processor; generating a grammar rule from said sentence type and said associated ordered list of concepts using a grammar rule generator; and providing said grammar rule to the speech recognition engine to resolve unrecognized sound groupings in the audible signal.

The method further preferably comprises the steps of, entering a plurality of sample utterances; parsing each of said sample utterances into a sentence type and an associated second ordered list of concepts using a natural language processor; generating a grammar rule from said sentence type and said associated second ordered list of concepts using a grammar rule generator; and providing said plurality of grammar rules to the speech recognition engine to resolve unrecognized sound groupings in the audible signal.

The method also preferably further comprises the steps of, providing a text input corresponding to a partially recognized audible signal to a natural language processor; parsing said text input into a second sentence type and an associated ordered 4933074v.1 list of recognized words and unrecognized sound groupings using the natural language processor; selecting a list of grammar rules associated with the second sentence type from said plurality of grammar rules, each grammar rule of said list having a plurality of constituent concepts; expanding each of said constituent concepts at a location corresponding to one of said unrecognized sound groupings into a plurality of related words; and providing said plurality of related words to the speech recognition engine to resolve the one of said unrecognized sound groupings.

## Claims

1. A method of speech recognition, said method comprising the steps of:
preparing a plurality of grammar rules, each of said plurality of grammar rules having a context designation assigned thereto;
determining a conversation context of a speech being recognized by a speech recognition engine from recognized speech and a selected response or from a list of concepts that occur in user input, and recording said conversation context in a context history;
if said conversation context corresponds to one of said context designations, assigning a ranking order to said context designation in a search sequence as a function of said context history; and
directing said speech recognition engine to search said plurality of grammar rules following said search sequence.

2. The method according to claim 1, wherein said ranking order correlates to how recent said conversation context appears in said context history.

3. The method according to claim 1, wherein said ranking order correlates to how frequent said conversation context appears in said context history.

4. The method according to claim 1, wherein said ranking order correlates to total length of time said conversation context represents in said context history.

5. A computer readable storage medium containing computer program instructions stored thereon, when executed by a processor, causing the processor to perform steps of the method of any one of claims 1 to 4.

## Patentansprüche

1. Verfahren zur Spracherkennung, wobei das Verfahren die Schritte aufweist:
Erstellen mehrerer Grammatikregeln, wobei jede der mehreren Grammatikregeln eine dieser zugeordneten Kontextbenennung umfasst,
Bestimmen eines Gesprächskontextes einer von einer Spracherkennungsmaschine erkannten Spracheingabe aus der erkannten Spracheingabe und einer ausgewählten Reaktion oder aus einer Liste von Begriffen, die in Benutzereingaben auftreten, und Aufnehmen des Gesprächskontextes in eine Kontexthistorie,
wenn der Gesprächskontext einer der Kontextbenennungen entspricht, Zuordnen einer Rangordnung zu der Kontextbenennung in einer Suchreihenfolge als Funktion der Kontexthistorie, und
Steuern der Spracherkennungsmaschine zum Durchsuchen der mehreren Grammatikregeln gemäß der Suchreihenfolge.

2. Verfahren nach Anspruch 1, wobei die Rangordnung damit korreliert, wie zeitnah der Gesprächskontext in der Kontexthistorie auftritt.

3. Verfahren nach Anspruch 1, wobei die Rangordnung damit korreliert, wie häufig der Gesprächskontext in der Kontexthistorie auftritt.

4. Verfahren nach Anspruch 1, wobei die Rangordnung mit der Gesamtdauer korreliert, die der Gesprächskontext in der Kontexthistorie ausmacht.

5. Computerlesbares Speichermedium, das auf diesem gespeicherte Computerprogrammanweisungen umfasst, wobei, wenn diese von einem Prozessor ausgeführt werden, der Prozessor dazu gebracht wird, die Schritte des Verfahrens nach einem der Ansprüche 1 bis 4 durchzuführen.

## Revendications

1. Procédé de reconnaissance vocale, le procédé comprenant les étapes qui consistent :
à préparer plusieurs règles de grammaire, une désignation de contexte étant attribuée à chacune de ces règles de grammaire ;
à déterminer un contexte de conversation de paroles en cours de reconnaissance par un moteur de reconnaissance vocale, à partir des paroles reconnues et d'une réponse sélectionnée ou d'une liste de concepts qui apparaissent dans l'entrée d'utilisateur, et à enregistrer le contexte de conversation dans un historique de contexte ;
si le contexte de conversation correspond à l'une des désignations de contexte, à attribuer un ordre hiérarchique à la désignation de contexte dans une séquence de recherche en fonction de l'historique de contexte ; et
à ordonner au moteur de reconnaissance vocale de rechercher les règles de grammaire suivant la séquence de recherche.

2. Procédé selon la revendication 1, étant précisé que l'ordre hiérarchique établit une corrélation avec le degré plus ou moins récent d'apparition du contexte de conversation dans l'historique de contexte.

3. Procédé selon la revendication 1, étant précisé que l'ordre hiérarchique établit une corrélation avec la fréquence d'apparition du contexte de conversation dans l'historique de contexte.

4. Procédé selon la revendication 1, étant précisé que l'ordre hiérarchique établit une corrélation avec la durée totale que le contexte de conversation représente dans l'historique de contexte.

5. Support de mémoire lisible par ordinateur, dans lequel sont stockées des instructions de programme informatique qui, lorsqu'elles sont exécutées par un processeur, amènent celui-ci à réaliser les étapes du procédé de l'une quelconque des revendications 1 à 4.
